# EUROPEAN PATENT SPECIFICATION

(11) **EP 0 926 944 B1**
(45) Date of publication and mention of the grant of the patent: **02.10.2002**
(21) Application number: 98911276.8
(22) Date of filing: 25.03.1998
(51) Int. Cl.: A01D 78/12

(54) **AN IMPLEMENT FOR DISPLACING CROP LYING ON THE SOIL, IN PARTICULAR A HAY TEDDER, AND A MOUNTING UNIT THEREFOR**
GERÄT ZUM VERSETZEN VON AUF DEM BODEN LIEGENDEM ERNTEGUT, INSBESONDERE KREISELHEUWENDER UND MONTAGEEINHEIT DAFÜR
OUTIL DESTINE A DEPLACER UNE RECOLTE REPOSANT SUR LE SOL, NOTAMMENT UN RATEAU-FANEUR, ET UNITE DE MONTAGE DE CELUI-CI

(30) Priority: 28.03.1997 NL 1005680; 26.02.1998 NL 1008423
(43) Date of publication of application: 07.07.1999
(73) Proprietor: MAASLAND N.V., 3155 PD Maasland (NL)
(72) Inventor: VAN DEN ENGEL, Alfonsus, Jacobus, NL-3123 CM Schiedam (NL)
(74) Representative: Corten, Maurice Jean F.M.
(86) International application number: NL9800166
(87) International publication number: WO98043472

(56) References cited:
- DE-A- 3 806 965
- DE-B- 1 295 265
- DE-U- 1 951 332
- FR-A- 1 506 191
- FR-A- 1 506 361
- FR-A- 2 340 034
- GB-A- 191 027 203
- GB-A- 191 116 403
- NL-A- 6 502 898
- NL-A- 8 000 855

## Description

The invention relates to an implement as claimed in the preamble of claim 1.

Such an implement is known from GB-A-16 403. The known implement comprises a plurality of hook shaped rake tines which are pivotally movably mounted radially upon a rotary disc. The machine further comprises a stationary wheel shaped cam with a curved edge over which the rake tines ride during the rotation of the device as a result of which the rake tines are raised and lowered from and towards the ground. The known machine has the disadvantage that the rake tines are permanent in contact with the edge of the wheel shaped cam, as result of which, due to friction between the rake tines and the edge of the cam, the rake members wear off.

The invention has for its object to provide an improved implement of the type known from GB-A-16 403.

According to the invention this is achieved by the features as defined in claim 1.

The invention enables to obtain a number of advantages, e.g. a reduction of the number of components of the implement. Further there is aimed at an improved security and reliability. There is also aimed at a prolongation of life. There may further be achieved a reduction of maintenance work and a more quiet implement. The rake function may be improved as well.

From document NL-A-6502898 there is known an implement that is provided with control means for moving the rake tines upwards or downwards across a segment of their curved path. Separate readjusting means, provided with a compression spring, engage radially extending mounting units (spokes) that fasten the rake tines to the rake members; these readjusting means try to readjust the rake tines against the action of the control means. The mounting units are freely pivotably fitted to the rake members due to the presence of a pivotal axis or because of the fact that they are made of resilient material, e.g. spring steel, at least across part of their length, so that they are capable of pivoting due to the bending of the resilient portion. From document FR-A-1.506.361 there is known a rake member, formed by a ring shaped disc with rake tines, which makes an oscillating movement while being driving around a vertical axis. This oscillating movement is controlled in such a way, that the rake tines are in a lower position near the soil at the frontside with respect to the direction of operative travel of the machine and in an upper position at the backside. It has been found that the oscillating movement of the rake tines is not favourable.

From document DE-A-1 295 265 there is known a rake member with hingeable rake arms which move separately upwards during rotation under the control of springs which are connected to bolts, which bolts during rotation of the rake members move along an excentric slot. This machine has the disadvantage that the slot through which the bolts are moved can easily be polluted, as result of which the rake arms are no longer moved up- and downwardly.

The invention also relates to a method of applying the implement according to the invention.

In what follows the invention will be explained in further detail on the basis of non-limiting exemplary embodiments, while reference is made to the accompanying drawings, in which:
Figure 1 shows a plan view of an implement according to a first embodiment of the invention;
Figure 2 shows a side view thereof;
Figure 3 shows a view taken on the line III-III in Figure 2;
Figure 4 shows a view taken on the line IV-IV in Figure 1;
Figure 5 shows a view according to Figure 4 of a second embodiment of the invention;
Figure 6 shows a view according to Figure 2 of a third embodiment of the invention;
Figure 7 shows to an enlarged scale, in a side view corresponding to that of Figure 2, part of a fourth embodiment of the invention;
Figure 8 shows to a smaller scale a partial front view of the implement of Figure 7;
Figure 9 shows a partial plan view according to the arrow IX in Figure 7;
Figure 10 is a partial cross-section according to the arrow X in Figure 8;
Figure 11 is a partial cross-section according to the arrow XI in Figure 8;
Figure 12 is a partial cross-section according to the arrow XII in Figure 8, and
Figure 13 is a partial cross-section of a mounting unit having another resilient support.

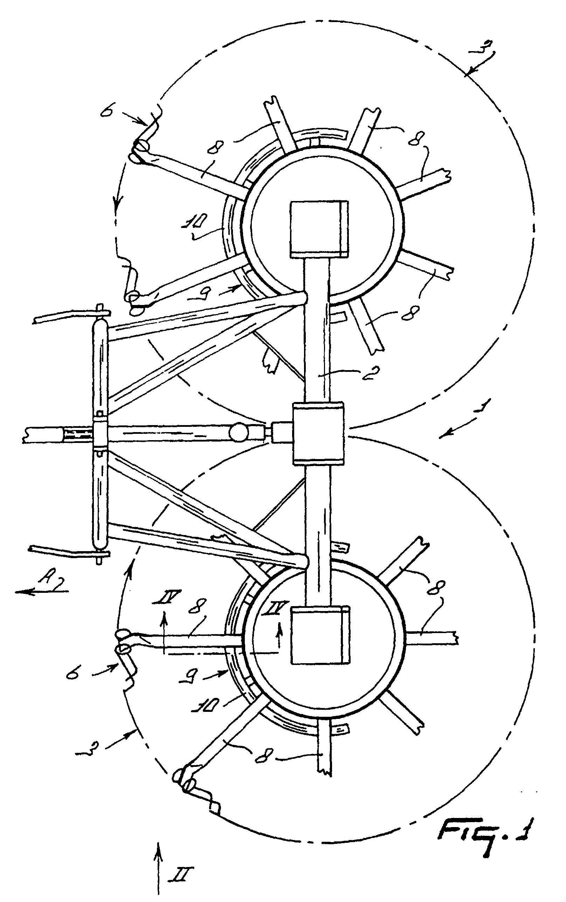

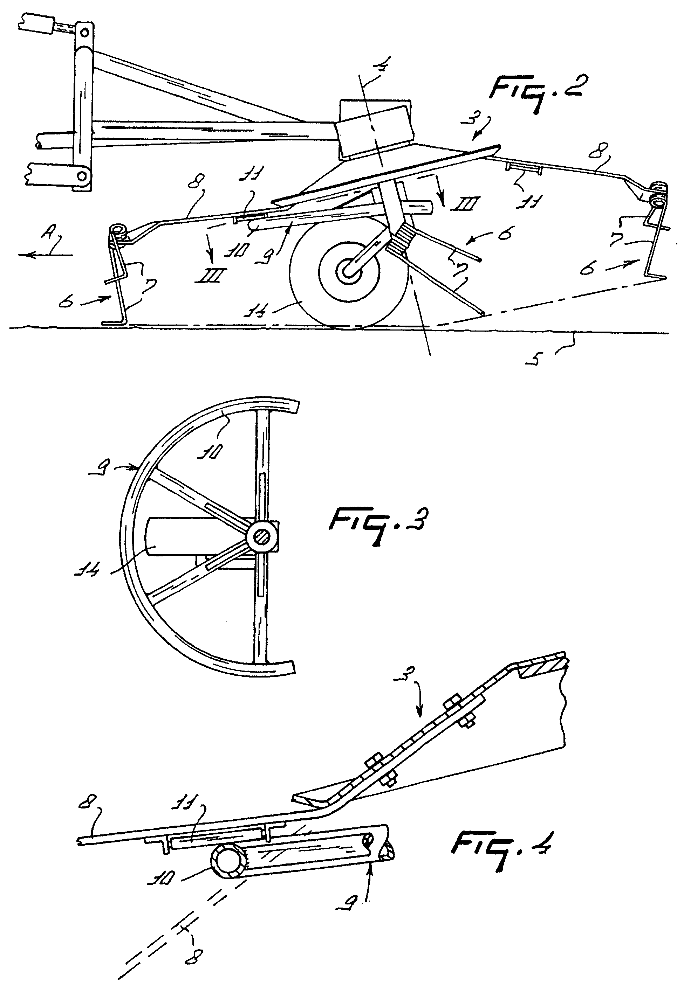

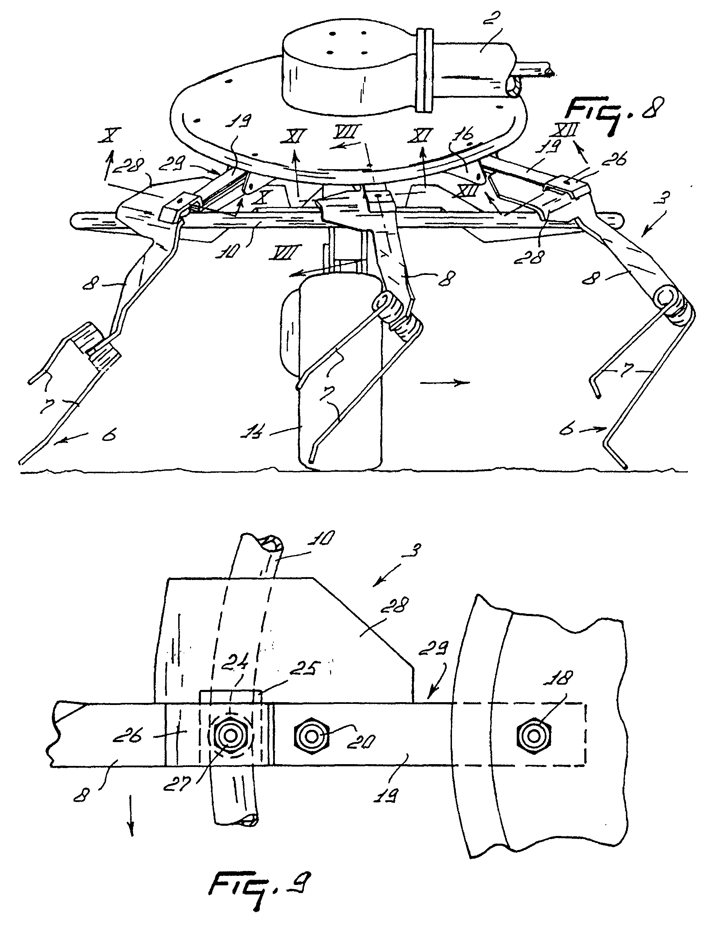

Figure 1 shows an implement 1 according to the invention, which implement is provided with a frame beam 2 on which two rake members 3 are disposed, which rake members 3 are driven so as to rotate in opposite directions as indicated by the arrows B. The usual direction of travel of the implement 1 is indicated by the arrow A. The rake members 3 may be driven, in a non-shown but generally known manner, from the power take-off shaft of a tractor. However, if required, the rake members 3 may be driven by their contact with the ground. As shown in Figure 2, each rake member 3 is rotatable about an axis of rotation 4 which, viewed in the usual direction of travel indicated by the arrow A, leans forward. Each rake member 3 is provided along its circumference with a number of rake members 6 disposed at approximately equal intervals. In this embodiment the rake members are each provided with two rake tines 7, though, of course, the number of rake tines may optionally be increased or decreased. These rake tines are designed in a customary manner, as e.g. described in NL-A-6502898. The rake members 6 are fitted to outwardly projecting, preferably radially extending mounting units 8. At their ends located nearest to the axis of rotation 4, these mounting units 8 are disposed on a carrier element pertaining to the rake member, which carrier element is constituted in this case by a disc. See also the carrier element 16 in Figure 7. Below the mounting units 8 there are provided control means 9 which are located substantially at the front side of the axis of rotation 4 relative to the usual direction of travel A. These control means 9 substantially comprise a circular ring 10 which is rigidly mounted relative to the frame beam 2. As shown in Figures 2 and 4, this ring 10 pushes the mounting units 8 upwards in the region at the front side of the- axis of rotation 4 relative to the usual direction of travel, to guide the rake tines 7 in that region substantially parallel to the ground 5, despite the oblique position of the axis of rotation 4.

In this embodiment the mounting units 8, at least in a region between their fastening to the rake member 3 and the place of cooperation with the ring 10, are designed as elastically flexible ones, e.g. made of spring steel or synthetic material. Synthetic material has the advantage of a better sound and vibration proofing. As in particular shown in Figure 4, the mounting units 8 are fitted without a hinge, i.e. rigidly, to the rake member 3. When not engaging the ring 10, the mounting units 8, due to their elastically resilient quality, will automatically return to their inoperative position indicated on the right-hand side in Figure 2. For the purpose of reducing friction and wear, but possibly also for the purpose of sound proofing, in this embodiment the ring 10 presses on each of the mounting units 8 via a rotating support, such as a roller 11. To this end, in this embodiment each mounting unit is provided at an appropriate place at its lower side with such a roller 11. Each roller 11 is fitted to the lower side of a mounting unit 8 by means of two supports. The axis of rotation of the roller extends preferably in the longitudinal direction of the mounting unit 8. The diameter of the roller is preferably smaller than 3 cm.

Instead of a roller there may also be used a wear-resistant and smooth covering for the ring 10 and/or the mounting unit 8. An alternative for the resilient fastening of the mounting units 8 may be as follows: the mounting units are fastened to the rake member so as to be at least substantially freely pivotable, and in or near their pivot point there is disposed a torsion spring ensuring their readjustment. Such a torsion spring construction is also possible in combination with other embodiments of the invention.

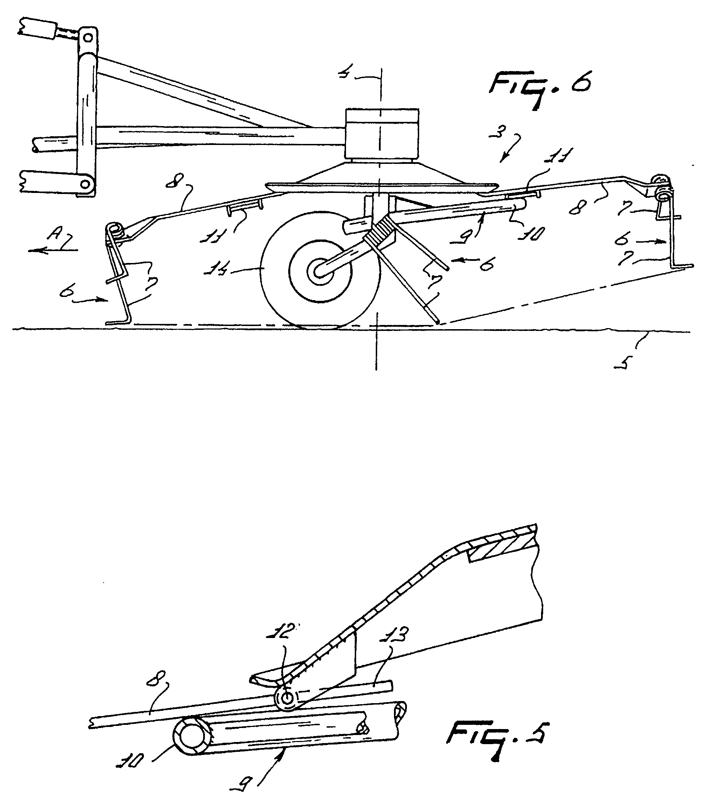

Figure 5 shows another embodiment of the invention in which the mounting unit is fitted to the rake member 3 so as to be freely pivotable about an axis 12 orientated substantially perpendicular to the axis of rotation 4. The place of the hinged axis 12 of the mounting unit 8 on the rake member 3 is chosen in such a manner that the end of the mounting unit 8 coupled with the rake member 6 is moved downwards under the influence of gravity. As shown in Figure 5, the mounting unit 8 is extended beyond the hinge 12, so that a stop 13 is formed, in order to limit the downward pivoting movement of the end of the mounting unit 8 coupled with the rake member 6. The effect of the ring 10 is the same as described in the foregoing, and the readjusting effect for the mounting unit 8 is now based on the influence of gravity. If required, there may be provided supporting readjusting means, e.g. a properly disposed auxiliary spring.

Figure 6 shows a variant having a substantially vertically orientated axis of rotation 4. The above-described control means 9 including the ring 10 are now located substantially at the rear side of the axis of rotation 4 relative to the usual direction of travel indicated by the arrow A. Also in this situation the ring 10 encloses an acute angle with the plane that is located perpendicular to the axis of rotation 4. In this embodiment there is made use of the elastically resilient qualities of the mounting units 8.

As shown, the mounting units are bent upwards by the ring 10 at the rear side of the axis of rotation 4 relative to the usual direction of travel. In this embodiment, at the front side of the rake member, the rake tines 7 move substantially parallel to the ground due to the vertical position of the axis of rotation of the rake member. Because of the location of the control means 9 the tines at the lateral side of the rake member move downwards into the raking position and move subsequently upwards from the raking position after having covered the raking segment. The aforementioned variant shown in Figure 5, based on the readjusting effect of gravity, is also applicable here.

Further variants are possible as well, e.g. those in which both at the front and the rear side of the axis of rotation 4 relative to the usual direction of travel A, there are provided control means 9. In this manner the. axis of rotation 4 may optionally have an intermediary position between the positions according to the embodiments of Figures 2 and 6. The ring 10, or an other bracket, may also be replaced by e.g. a dish that is freely rotating about its axis, e.g. as known per se from NL-A-6052898. An improved embodiment thereof will be described with reference to Figures 7 and following. The advantage of the ring 10, which has a fixed position relative to the frame beam 2, is the easy mounting which may also take place afterwards without substantial adjustments being required. In particular when the control means are located at the rear side of the axis of rotation 4 relative to the usual direction of travel of the implement, it may be of advantage to design same as curved ones, so that the portion cooperating with the mounting units is not located in one single plane. Instead of being strip-shaped, the mounting units may also be designed as profiled ones, e.g. be made of tube material. For extra elastic flexibility their shape may be adapted locally, e.g. be tapering or be bent one or more times (e.g. in a zigzag or folded manner). Instead of being supported by one or more running wheels 14, as shown in the drawings, the implement 1 may also be designed so as to be suspended, without supporting means, from a tractor.

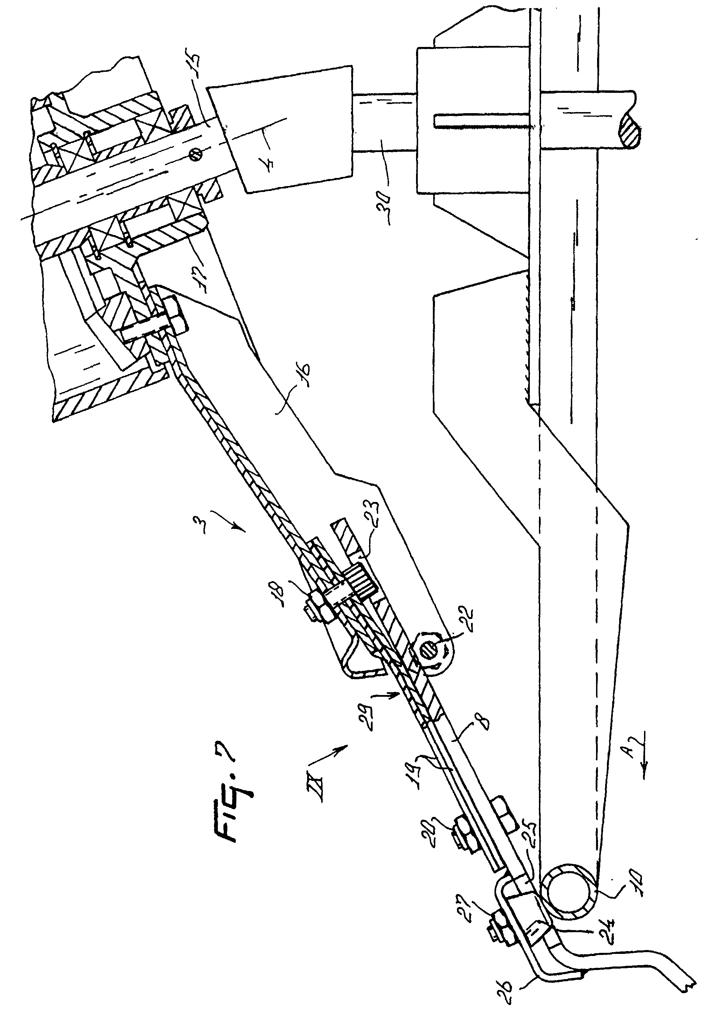

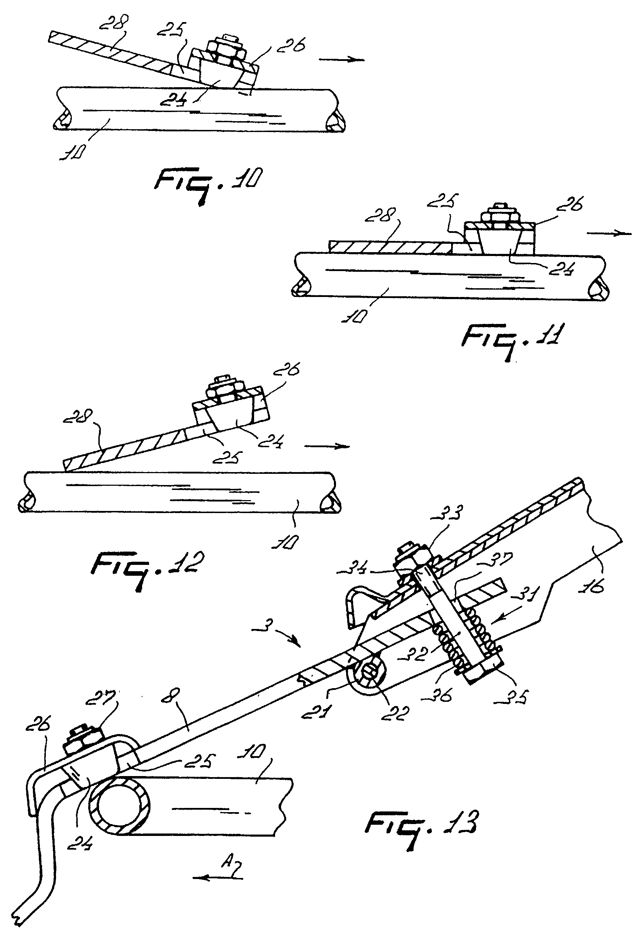

In the description of the implement on the basis of Figures 7 to 12 parts corresponding to those of Figures 1 to 6 are indicated by the same reference numerals.

The implement comprises rake members 3 which are rotatable about an imaginary axis of rotation 4 which, seen from above, is orientated rearwardly relative to the direction of travel A. This axis of rotation is constituted in this case by a real axis 15. The implement is provided with mounting units 8 which extend from outside towards the axis, preferably radially, and are attached to a disc-shaped carrier element 16 that is disposed on a bearing case 17. The bearing case 17 is rotatable about the axis 15.

By means of two resilient strips 19 that are disposed one on top of the other, and bolts and nuts 18, the mounting units 8 are fastened to the support 16. The resilient strips themselves are fastened to the mounting units 8 with the aid of bolts and nuts 20, whereas the mounting units 8 are fastened to the disc-shaped support 16 by means of at least substantially horizontal bearings 21 and bolts and nuts 22.

As the strips 19 will move somewhat relative to each other upon pivoting of the mounting units 8 about the bolts 22, the mounting units each have at their upper ends an aperture 23 into which the heads of the bolts 18 will be inserted with some backlash.

The mounting units 8 are provided with resilient supports 24, e.g. rubber caps, which are inserted into the mounting units 8 through apertures 25 and are fastened to the mounting units 8 with the aid of brackets 26 and nutted bolt connections 27.

The mounting units 8 are each provided with one or more rake tines 7, two in this case. In this embodiment the mounting units 8 each have a protrusion 28 extending in the region of the resilient support 24 against the normal direction of rotation B of the rake member. This protrusion may have a size of 5 to 12 cm, e.g. approximately 10 cm. The disc-shaped support 16 has a protective and stiffening strip 29 for each mounting unit 8.

The axis of rotation 15 is bent below the disc-shaped support and on the bent portion 30 there is disposed a freely rotating ring 10 which serves as a control means 9. A plane located perpendicular to the bent portion 30 forms an angle between 20° and 40°, in this case an angle of approximately 30°, with a plane located perpendicular to the axis 15.

Like described in the foregoing, the ring 10 is disposed in such a manner that the rake tines located at the front side of the machine are moved by the control means at least substantially parallel to the ground and are moved by the control means in combination with the mounting means upwards and downwards.

The protrusions 28 contribute to a favourable adjustment of the tines. When controlling the mounting units 8, viewed in the direction of rotation first the resilient supports come into contact with the ring 10. In this case protrusions 28 are directed upwards and form an angle with the aforementioned plane of the ring 10, which angle, seen in the direction of rotation, is open rearwardly.

Upon further rotation of the rake member the mounting unit 8 turns over in such a manner that the protrusion 28 assumes a horizontal position and bears on the ring 10.

Upon further rotation, when the mounting unit is moved upwards along with the rake tines 7, first the resilient support 24 of the ring 10 is moved upwards and subsequently the rear side of the protrusion 28 will bear longest against the ring. This is shown in Figures 10 to 12.

This embodiment has a number of advantages. In the first place the movement of the tines when coming down to the horizontal segment and when being moved upwards is gradual because the movements smoothly merge into one another. In comparison with one strip of resilient material, the resilient fastening of two resilient strips 19 one on top of the other prolongs the life of the strips to a significant extent.

The covering of the fastening by the protective and stiffening strips 29 enables to produce the rake wheel as a solid and yet not too heavy one.

It will be obvious that the position of the rake tines and the segments to be covered by them can be changed by adjusting the ring 10 (i.e. the control means), e.g. in height to a greater or a lesser extent.

The construction shown in Figure 13 corresponds in broad outline to the construction according to Figure 7 and, therefore, corresponding parts are indicated by the same reference numerals.

Instead of the resilient strips 19 the mounting unit 8 has a resilient support 31 consisting of a bar 32 which is fastened to the carrier element 16 by means of a nut 33 and a screw 34. The bar 32 has at its free, downwardly extending end a head 35. Between the head 35 and the free, upwardly orientated end of the mounting unit 8 (i.e. the inside) there is disposed a spring 36. The bar 32 is passed with some clearance through an aperture 37 in the mounting unit. Said spring, which is located around the bar 32 and designed as a coiled spring, ensures a resilient support of the mounting unit and exercises a force by which the cap 24 is pressed downwards against the ring 10. The tension of the spring can be adjusted by rotating the nut 33, so that the movability of the tines near the ground can be influenced.

It will be obvious that within the scope of the invention, as defined by the following claims, further variants are possible as well.

## Claims

1. An implement for displacing crop lying on the soil, comprising a frame (2) and one or more rake members (3) which are each rotatable about a respective axis of rotation (4), each rake member being provided with a number of rake tines (7) which are capable of rotating about said axis and which are fitted to mounting units (8) that extend outwardly relative to the axis of rotation (4) and are disposed, at their ends located nearest to the axis of rotation, on a carrier element pertaining to the rake member, said implement comprising control means (9) with the aid of which the tines can be brought from a high position into a low position and vice versa, the control means (9) are designed in such a manner that the rake tines are moved towards the ground, are subsequently moved at least substantially parallel to the ground across a segment of their curved path, while exercising their rake function, and are subsequently moved upwards for the purpose of throwing away the crop, and the control means (9) are provided with a substantially inflexible body (9), which is stationary relative to the frame, **characterized in that** the inflexible body (9) extends only partially at some distance around the axis of rotation, for sliding or rolling co-operation with the mounting unit (8).

2. An implement as claimed in claim 1, **characterized in that** the axis of rotation (4) encloses an angle with the vertical.

3. An implement as claimed in claim 2, **characterized in that** the mounting units (8) are non-pivotably fastened to the rake member in radial direction relative to the axis of rotation (4).

4. An implement as claimed in any one of the preceding claims, **characterized in that** the mounting means are strip-shaped.

5. An implement as claimed in any one of the preceding claims, **characterized in that** the control means (9) act on the mounting units (8) at a greater distance from the axis of rotation (4) than the distance from the fastening of the mounting units to the rake member.

6. An implement as claimed in any one of the preceding claims, **characterized in that** the control means (9) comprise a guide element acting on the mounting unit (8).

7. An implement as claimed in any one of the preceding claims, **characterized in that** the control means (9) are counteracted by readjusting means, which readjusting means are at least substantially based on the influence of gravity on the mounting units.

8. An implement as claimed in any one of the preceding claims, **characterized in that** the control means (9) are counteracted by readjusting means, which readjusting means are at least substantially based on the own elastic resilience of the mounting units.

9. An implement as claimed in any one of the preceding claims, **characterized in that** the rake tines move across a segment of their curved path of preferably approximately 180° at least almost parallel to the ground.

10. An implement as claimed in any one of the preceding claims, **characterized in that** the plane in which the active portion of the control means (9) is located encloses an acute angle with a plane that is perpendicular to the axis of rotation (4).

11. An implement as claimed in any one of claims 2 to 14, **characterized in that** the axis of rotation (4), viewed towards the ground, extends obliquely rearwards relative to the direction of travel of the implement.

12. An implement as claimed in any one of the preceding claims, **characterized in that** the control means (9) are active at the front side of the axis of rotation (4) relative to the direction of travel, and above or below the mounting unit (8).

13. An implement as claimed in any one of claims 1 to 9, **characterized in that** the control means (9) are active at the rear side of the axis of rotation (4) relative to the direction of travel of the implement, and above or below the mounting unit (8).

14. An implement as claimed in any one of the preceding claims, **characterized in that** the control means (9) are adjustable for the purpose of adjusting the segment of the curved path across which the rake tines (7) are located in their second angular position.

15. An implement as claimed in claim 11, **characterized in that** the control means (9) are capable of being moved in height.

16. An implement as claimed in any one of the preceding claims, **characterized in that** the control means (9) are capable of being moved horizontally.

17. An implement as claimed in any one of the preceding claims, **characterized in that** the control means (9) engage the rake member (3) by means of a wear-resistant, preferably smooth material or rotating body (11).

18. An implement as claimed in any one of the preceding claims, **characterized in that** the mounting unit (8) is rigidly fitted to the rake member (3) and is designed as an elastically resilient one, e.g. made of spring steel or synthetic material.

19. An implement as claimed in any one of the preceding claims, **characterized in that** the mounting unit (8) is secured to the rake member (3) and has an adapted shape so as to be elastically resilient to a sufficient extent.

20. An implement as claimed in any one of the preceding claims, **characterized in that** the mounting unit (8) is fitted to the rake member (3) so as to be at least substantially freely hingeable upwards and downwards across at least a segment of a circle.

21. An implement as claimed in claim 20, **characterized in that** the mounting unit (8) is provided with a stop (13) which cooperates with a stop that is in a fixed position relative to the frame (2), for the purpose of limiting the upward or downward movement.

22. An implement as claimed in claim 21, **characterized in that** the stop (13) is located at the side of the hinge (12) facing away from the rake tine (7).

23. An implement as claimed in any one of the preceding claims, **characterized in that** the mounting unit (8) is a plate-shaped, bar-shaped or strip-shaped element.

24. An implement as claimed in any one of the preceding claims, **characterized in that** the mounting units are each provided with a downwardly orientated, resilient, preferably elastic support which, during rotation of the rake member, comes into contact with the control means (9), more in particular a ring (10).

25. An implement as claimed in any one of the preceding claims, **characterized in that** each of the mounting units (8) has a protrusion (28) which, viewed in the direction of rotation of the rake member, is orientated rearwardly.

26. An implement as claimed in claims 24 and 25, **characterized in that** the protrusion (28) is located behind the resilient or elastic support.

27. An implement as claimed in any one of the preceding claims, **characterized in that** upon rotation of the rake member first the resilient or elastic support comes into contact with the freely rotating control means (9), that subsequently both the support and the protrusion come into contact with the control means (9) and afterwards only the protrusion (28) comes into contact with the control means (9).

28. An implement as claimed in claim 27, **characterized in that** across the segment of the curved path of the rake member in which both the resilient or elastic element and the protrusion are in contact with the control means (9), the tines move substantially parallel to the ground.

29. An implement as claimed in any one of the preceding claims 24 to 28, **characterized in that** the resilient or elastic support is guarded at its upper side.

30. An implement as claimed in any one of the preceding claims 25 to 29, **characterized in that** the protrusion (28) is located at least substantially in the plane of the mounting unit (8).

31. An implement as claimed in any one of the preceding claims, **characterized in that** two immediately adjacent rake members (3) are driven so as to rotate in opposite directions.

32. An implement as claimed in any one of the preceding claims, **characterized in that** the control means (9), in their operative position, engage the rake member (3) from its lower side.

33. An implement as claimed in any one of the preceding claims, **characterized in that** the mounting unit (8) lacks separate readjusting means.

34. An implement as claimed in any one of the preceding claims 1 to 33, **characterized in that** a compression spring (36) is disposed on the inside of the mounting unit (8).

35. An implement as claimed in claim 34, **characterized in that** the compression spring (36) is designed as a coiled spring.

36. An implement as claimed in any one of claims 34 or 35, **characterized in that** the tension of the spring (36) can be adjusted.

37. A method of applying an implement for displacing crop lying on the soil, comprising a frame (2) and one or more rake members (3) which are each rotatable about a respective axis of rotation (4), each rake member being provided with a number of rake tines (7) which are capable of rotating about said axis and which are fitted to mounting units (8) that extend outwardly relative to the axis of rotation (4) and are disposed, at their ends located nearest to the axis of rotation, on a carrier element pertaining to the rake member, said implement comprising control means (9) with the aid of which the tines can be brought from a high position into a low position and vice versa, the control means (9) are designed in such a manner that the rake tines are moved towards the ground, are subsequently moved at least substantially parallel to the ground across a segment of their curved path, while exercising their rake function, and are subsequently moved upwards for the purpose of throwing away the crop, and the control means (9) are provided with a substantially inflexible body (9), which is stationary relative to the frame, **characterized in that** the inflexible body (9) extends only partially at some distance around the axis of rotation, for sliding or rolling cooperation with the mounting unit (8).

## Patentansprüche

1. Gerät zum Verlagern von auf dem Boden liegendem Erntegut mit einem Rahmen (2) und einem oder mehreren Rechkörpern (3), die jeweils um eine entsprechende Drehachse (4) drehbar sind, wobei jeder Rechkörper mit einer Anzahl von Rechzinken (7) versehen ist, die um die Achse drehbar und an Montageeinheiten (8) befestigt sind, die sich relativ zu der Drehachse (4) nach außen erstrecken und mit ihren der Drehachse am nächsten liegenden Enden an einem zum Rechkörper gehörenden Tragelement angebracht sind, wobei das Gerät Steuervorrichtungen (9) umfaßt, mit deren Hilfe die Zinken von einer hohen Position in eine niedrige Position und zurück bewegt werden können, wobei die Steuervorrichtungen (9) derart ausgebildet sind, daß die Rechzinken zum Boden bewegt werden, danach zumindest im wesentlichen parallel zum Boden über ein Segment ihres gekrümmten Bewegungsweges bewegt werden, wobei sie ihre Rechfunktion ausüben, und anschließend zum Wegschleudern des Gutes nach oben bewegt werden, und wobei die Steuervorrichtungen (9) mit einem im wesentlichen starren Körper (9) versehen sind, der relativ zu dem Rahmen feststehend ist,
**dadurch gekennzeichnet, daß** sich der starre Körper (9) zum gleitenden oder rollenden Zusammenwirken mit der Montageeinheit (8) nur teilweise in einigem Abstand um die Drehachse erstreckt.

2. Gerät nach Anspruch 1,
**dadurch gekennzeichnet, daß** die Drehachse (4) mit der Vertikalen einen Winkel bildet.

3. Gerät nach Anspruch 2,
**dadurch gekennzeichnet, daß** die Montageeinheiten (8) in radialer Richtung relativ zu der Drehachse (4) nichtdrehbar an dem Rechkörper befestigt sind.

4. Gerät nach einem der vorhergehenden Ansprüche,
**dadurch gekennzeichnet, daß** die Montagevorrichtungen flachteilförmig ausgebildet sind.

5. Gerät nach einem der vorhergehenden Ansprüche,
**dadurch gekennzeichnet, daß** die Steuervorrichtungen (9) auf die Montageeinheiten (8) in einem Abstand von der Drehachse (4) einwirken, der größer ist als der Abstand von der Befestigungsstelle der Montageeinheiten an dem Rechkörper.

6. Gerät nach einem der vorhergehenden Ansprüche,
**dadurch gekennzeichnet, daß** die Steuervorrichtungen (9) ein Führungselement umfassen, das auf die Montageeinheit (8) einwirkt.

7. Gerät nach einem der vorhergehenden Ansprüche,
**dadurch gekennzeichnet, daß** den Steuervorrichtungen (9) Rückstellvorrichtungen entgegenwirken, die zumindest im wesentlichen auf dem Einfluß der Schwerkraft auf die Montageeinheiten basieren.

8. Gerät nach einem der vorhergehenden Ansprüche,
**dadurch gekennzeichnet, daß** den Steuervorrichtungen (9) Rückstellvorrichtungen entgegenwirken, die zumindest im wesentlichen auf der eigenen elastischen Spannkraft der Montageeinheiten basieren.

9. Gerät nach einem der vorhergehenden Ansprüche,
**dadurch gekennzeichnet, daß** sich die Rechzinken über ein Segment ihres gekrümmten Bewegungsweges von vorzugsweise etwa 180° zumindest annähernd parallel zum Boden bewegen.

10. Gerät nach einem der vorhergehenden Ansprüche,
**dadurch gekennzeichnet, daß** die Ebene, in der der aktive Teil der Steuervorrichtung (9) liegt, einen spitzen Winkel mit einer Ebene bildet, die sich senkrecht zur Drehachse (4) erstreckt.

11. Gerät nach einem der Ansprüche 2 bis 10,
**dadurch gekennzeichnet, daß** sich die Drehachse (4) in Richtung zum Boden betrachtet in bezug auf die Arbeitsrichtung des Gerätes schräg nach hinten erstreckt.

12. Gerät nach einem der vorhergehenden Ansprüche,
**dadurch gekennzeichnet, daß** die Steuervorrichtungen (9) in bezug auf die Arbeitsrichtung auf der Vorderseite der Drehachse (4) und über oder unter der Montageeinheit (8) wirksam sind.

13. Gerät nach einem der Ansprüche 1 bis 9,
**dadurch gekennzeichnet, daß** die Steuervorrichtungen (9) in bezug auf die Arbeitsrichtung des Gerätes auf der Rückseite der Drehachse (4) und über oder unter der Montageeinheit (8) wirksam sind.

14. Gerät nach einem der vorhergehenden Ansprüche,
**dadurch gekennzeichnet, daß** die Steuervorrichtungen (9) einstellbar sind, um das Segment des gekrümmten Bewegungsweges einzustellen, über dem die Rechzinken (7) in ihrer zweiten Winkelposition angeordnet sind.

15. Gerät nach Anspruch 11,
**dadurch gekennzeichnet, daß** die Steuervorrichtungen (9) höhenbewegbar sind.

16. Gerät nach einem der vorhergehenden Ansprüche,
**dadurch gekennzeichnet, daß** die Steuervorrichtungen (9) in horizontaler Richtung bewegbar sind.

17. Gerät nach einem der vorhergehenden Ansprüche,
**dadurch gekennzeichnet, daß** die Steuervorrichtung (9) mit dem Rechkörper (3) mittels eines verschleißfesten, vorzugsweisen glatten Materials oder rotierenden Körpers (11) in Eingriff tritt.

18. Gerät nach einem der vorhergehenden Ansprüche,
**dadurch gekennzeichnet, daß** die Montageeinheit (8) starr an dem Rechkörper (3) befestigt und als elastisch federnde Einheit ausgebildet ist, die z. B. aus Federstahl oder Kunststoff hergestellt ist.

19. Gerät nach einem der vorhergehenden Ansprüche,
**dadurch gekennzeichnet, daß** die Montageeinheit (8) an dem Rechkörper (3) befestigt ist und eine derart angepaßte Form aufweist, daß sie in ausreichendem Maße elastisch federnd ist.

20. Gerät nach einem der vorhergehenden Ansprüche,
**dadurch gekennzeichnet, daß** die Montageeinheit (8) an dem Rechkörper (3) derart angebracht ist, daß sie zumindest im wesentlichen über mindestens ein Segment eines Kreises frei nach oben und unten schwenkbar ist.

21. Gerät nach Anspruch 20,
**dadurch gekennzeichnet, daß** die Montageeinheit (8) mit einem Anschlag (13) versehen ist, der mit einem relativ zu dem Rahmen (2) lagefest angeordneten Anschlag zusammenwirkt, um die Auf- oder Abwärtsbewegung zu begrenzen.

22. Gerät nach Anspruch 21,
**dadurch gekennzeichnet, daß** der Anschlag (13) auf der Seite der Gelenkachse (12) angeordnet ist, die von dem Rechzinken (7) abgewandt ist.

23. Gerät nach einem der vorhergehenden Ansprüche,
**dadurch gekennzeichnet, daß** die Montageeinheit (8) durch ein plattenförmiges, stangenförmiges oder flachteilförmiges Element gebildet ist.

24. Gerät nach einem der vorhergehenden Ansprüche,
**dadurch gekennzeichnet, daß** die Montageeinheiten jeweils mit einer nach unten gerichteten, federnden, vorzugsweise elastischen Stütze, die während der Drehung des Rechkörpers in Kontakt mit der Steuervorrichtung (9) kommt, insbesondere mit einem Ring (10) versehen sind.

25. Gerät nach einem der vorhergehenden Ansprüche,
**dadurch gekennzeichnet, daß** jede der Montageeinheiten (8) einen Vorsprung (28) aufweist, der in Drehrichtung des Rechkörpers betrachtet nach hinten gerichtet ist.

26. Gerät nach den Ansprüchen 24 und 25,
**dadurch gekennzeichnet, daß** der Vorsprung (28) hinter der federnden oder elastischen Stütze liegt.

27. Gerät nach einem der vorhergehenden Ansprüche,
**dadurch gekennzeichnet, daß** beim Drehen des Rechkörpers zuerst die federnde oder elastische Stütze mit der frei drehbaren Steuervorrichtung (9) in Kontakt kommt, daß anschließend sowohl die Stütze als auch der Vorsprung mit der Steuervorrichtung (9) in Kontakt kommen und danach nur der Vorsprung (28) mit der Steuervorrichtung (9) in Kontakt kommt.

28. Gerät nach Anspruch 27,
**dadurch gekennzeichnet, daß** sich die Zinken über dem Segment des gekrümmten Bewegungsweges des Rechkörpers, in dem sowohl das federnde oder elastische Element als auch der Vorsprung mit der Steuervorrichtung (9) in Kontakt stehen, im wesentlichen parallel zum Boden bewegen.

29. Gerät nach einem der vorhergehenden Ansprüche 24 bis 28,
**dadurch gekennzeichnet, daß** die federnde oder elastische Stütze an ihrer Oberseite geschützt ist.

30. Gerät nach einem der vorhergehenden Ansprüche 25 bis 29,
**dadurch gekennzeichnet, daß** der Vorsprung (28) zumindest im wesentlichen in der Ebene der Montageeinheit (8) liegt.

31. Gerät nach einem der vorhergehenden Ansprüche,
**dadurch gekennzeichnet, daß** zwei unmittelbar benachbarte Rechkörper (3) derart angetrieben werden, daß sie sich in entgegengesetzte Richtungen drehen.

32. Gerät nach einem der vorhergehenden Ansprüche,
**dadurch gekennzeichnet, daß** die Steuervorrichtung (9) in ihrer Arbeitslage mit dem Rechkörper (3) an dessen Unterseite in Eingriff tritt.

33. Gerät nach einem der vorhergehenden Ansprüche,
**dadurch gekennzeichnet, daß** die Montageeinheit (8) keine separate Rückstellvorrichtung aufweist.

34. Gerät nach einem der vorhergehenden Ansprüche 1 bis 33,
**dadurch gekennzeichnet, daß** an der Innenseite der Montageeinheit (8) eine Druckfeder (36) angeordnet ist.

35. Gerät nach Anspruch 34,
**dadurch gekennzeichnet, daß** die Druckfeder (36) als Spiralfeder ausgeführt ist.

36. Gerät nach einem der Ansprüche 34 oder 35,
**dadurch gekennzeichnet, daß** die Spannung der Feder (36) einstellbar ist.

37. Verfahren zur Verwendung eines Gerätes zum Verlagern von auf dem Boden liegendem Erntegut mit einem Rahmen (2) und einem oder mehreren Rechkörpern (3), die jeweils um eine entsprechende Drehachse (4) drehbar sind, wobei jeder Rechkörper mit einer Anzahl von Rechzinken (7) versehen ist, die um die Achse drehbar und an Montageeinheiten (8) befestigt sind, die sich relativ zu der Drehachse (4) nach außen erstrecken und mit ihren der Drehachse am nächsten liegenden Enden an einem zum Rechkörper gehörenden Tragelement angebracht sind, wobei das Gerät Steuervorrichtungen (9) umfaßt, mit deren Hilfe die Zinken von einer hohen Position in eine niedrige Position und zurück bewegt werden können, wobei die Steuervorrichtungen (9) derart ausgebildet sind, daß die Rechzinken zum Boden bewegt werden, danach zumindest im wesentlichen parallel zum Boden über ein Segment ihres gekrümmten Bewegungsweges bewegt werden, wobei sie ihre Rechfunktion ausüben, und anschließend zum Wegschleudern des Gutes nach oben bewegt werden, und wobei die Steuervorrichtungen (9) mit einem im wesentlichen starren Körper (9) versehen sind, der relativ zu dem Rahmen feststehend ist,
**dadurch gekennzeichnet, daß** sich der starre Körper (9) zum gleitenden oder rollenden Zusammenwirken mit der Montageeinheit (8) nur teilweise in einigem Abstand um die Drehachse erstreckt.

## Revendications

1. Outil destiné à déplacer une récolte reposant sur le sol, comprenant un cadre (2) et un ou plusieurs éléments de râtelage (3) qui tournent chacun autour d'un axe de rotation respectif (4), chaque élément de râtelage étant équipé d'un certain nombre de dents de râtelage (7) qui sont capables de tourner autour dudit axe et qui sont fixées aux unités de montage (8) qui s'étendent vers l'extérieur par rapport à l'axe de rotation (4) et sont disposées, au niveau de leurs extrémités situées le plus près de l'axe de rotation, sur un élément de support appartenant à l'élément de râtelage, ledit outil comprenant des moyens de commande (9) à l'aide desquels les dents peuvent être amenées d'une position haute à une position basse et vice versa, les moyens de commande (9) sont conçus de telle manière que les dents de râtelage sont déplacées vers le sol, sont ensuite déplacées de façon au moins sensiblement parallèle au sol sur un segment de leur trajectoire courbe, tout en exerçant leur fonction de râtelage, et sont ensuite déplacées vers le haut dans le but de disperser la récolte, et les moyens de commande (9) possèdent un corps sensiblement rigide (9), qui est immobile par rapport au cadre, **caractérisé en ce que** le corps rigide (9) s'étend uniquement en partie à une certaine distance autour de l'axe de rotation, pour coopérer en glissement ou rotation avec l'unité de montage (8).

2. Outil selon la revendication 1, **caractérisé en ce que** l'axe de rotation (4) forme un angle avec la verticale.

3. Outil selon la revendication 2, **caractérisé en ce que** les unités de montage (8) sont fixées de manière non pivotante à l'élément de râtelage dans le sens radial par rapport à l'axe de rotation (4).

4. Outil selon l'une quelconque des revendications précédentes, **caractérisé en ce que** les moyens de fixation sont en forme de bandes.

5. Outil selon l'une quelconque des revendications précédentes, **caractérisé en ce que** les moyens de commande (9) agissent sur les unités de montage (8) à une distance plus importante de l'axe de rotation (4) que la distance séparant la fixation des unités de montage et l'élément de râtelage.

6. Outil selon l'une quelconque des revendications précédentes, **caractérisé en ce que** les moyens de commande (9) comprennent un élément de guidage agissant sur l'unité de montage (8).

7. Outil selon l'une quelconque des revendications précédentes, **caractérisé en ce que** les moyens de commande (9) sont contrebalancés par des moyens de réajustement, lesquels moyens de réajustement sont au moins sensiblement basés sur l'influence de la gravité sur les unités de montage.

8. Outil selon l'une quelconque des revendications précédentes, **caractérisé en ce que** les moyens de commande (9) sont contrebalancés par des moyens de réajustement, lesquels moyens de réajustement sont au moins sensiblement basés sur la propre élasticité des unités de montage.

9. Outil selon l'une quelconque des revendications précédentes, **caractérisé en ce que** les dents de râtelage se déplacent sur un segment de leur trajectoire courbe faisant de préférence environ 180° au moins quasiment parallèle au sol.

10. Outil selon l'une quelconque des revendications précédentes, **caractérisé en ce que** le plan dans lequel la partie active des moyens de commande (9) est située renferme un angle aigu avec un plan qui est perpendiculaire à l'axe de rotation (4).

11. Outil selon l'une quelconque des revendications 2 à 14, **caractérisé en ce que** l'axe de rotation (4), en regardant vers le sol, s'étend obliquement vers l'arrière par rapport au sens de déplacement de l'outil.

12. Outil selon l'une quelconque des revendications précédentes, **caractérisé en ce que** les moyens de commande (9) sont actifs à l'avant de l'axe de rotation (4) par rapport au sens de déplacement, et en dessus et en dessous de l'unité de montage (8).

13. Outil selon l'une quelconque des revendications 1 à 9, **caractérisé en ce que** les moyens de commande (9) sont actifs à l'arrière de l'axe de rotation (4) par rapport au sens de déplacement de l'outil, et en dessus et en dessous de l'unité de montage (8).

14. Outil selon l'une quelconque des revendications précédentes, **caractérisé en ce que** les moyens de commande (9) sont réglables en vue d'ajuster le segment de la trajectoire courbe sur laquelle sont situées les dents de râtelage (7) dans leur seconde position angulaire.

15. Outil selon la revendication 11, **caractérisé en ce que** les moyens de commande (9) peuvent être déplacés en hauteur.

16. Outil selon l'une quelconque des revendications précédentes, **caractérisé en ce que** les moyens de commande (9) peuvent être déplacés horizontalement.

17. Outil selon l'une quelconque des revendications précédentes, **caractérisé en ce que** les moyens de commande (9) engagent l'élément de râtelage (3) au moyen d'un élément ou corps tournant (11) de préférence lisse et résistant à l'usure.

18. Outil selon l'une quelconque des revendications précédentes, **caractérisé en ce que** l'unité de montage (8) est fixée de façon rigide à l'élément de râtelage (3) et est conçue comme une unité élastique, fabriquées par exemple à partir d'acier à ressorts ou d'un matériau synthétique.

19. Outil selon l'une quelconque des revendications précédentes, **caractérisé en ce que** l'unité de montage (8) est fixée à l'élément de râtelage (3) et a une forme adaptée de telle sorte à présenter une élasticité suffisante.

20. Outil selon l'une quelconque des revendications précédentes, **caractérisé en ce que** l'unité de montage (8) est fixée à l'élément de râtelage (3) de telle sorte à pouvoir au moins sensiblement être articulée librement vers le haut et vers le bas sur au moins un segment d'un cercle.

21. Outil selon la revendication 20, **caractérisé en ce que** l'unité de montage (8) comprend une butée (13) qui coopère avec une butée qui est dans une position fixe par rapport au cadre (2), dans le but de limiter le mouvement vers le haut et vers le bas.

22. Outil selon la revendication 21, **caractérisé en ce que** la butée (13) est située sur le côté de l'articulation (12) à l'opposé de la dent de râtelage (7).

23. Outil selon l'une quelconque des revendications précédentes, **caractérisé en ce que** l'unité de montage (8) est un élément en forme de plaque, de barre ou de bande.

24. Outil selon l'une quelconque des revendications précédentes, **caractérisé en ce que** les unités de montage comprennent chacune un support orienté vers le bas, résilient et de préférence élastique qui, pendant la rotation de l'élément de râtelage, vient en contact avec les moyens de commande (9), plus en particulier une bague (10).

25. Outil selon l'une quelconque des revendications précédentes, **caractérisé en ce que** les unités de montage (8) présentent une saillie (28) qui, vue dans le sens de rotation de l'élément de râtelage, est orientée vers l'arrière.

26. Outil selon l'une quelconque des revendications 24 et 25, **caractérisé en ce que** la saillie (28) est située derrière le support résilient ou élastique.

27. Outil selon l'une quelconque des revendications précédentes, **caractérisé en ce que** lors de la rotation de l'élément de râtelage, le support résilient ou élastique entre tout d'abord en contact avec les moyens de commande tournant librement (9), ensuite le support et la saillie entrent tous deux en contact avec les moyens de commande (9) et enfin, seule la saillie (28) entre en contact avec les moyens de commande (9).

28. Outil selon la revendication 27, **caractérisé en ce que** sur le segment de la trajectoire courbe de l'élément de râtelage dans lequel l'élément résilient ou élastique ainsi que la saillie sont en contact avec les moyens de commande (9), les dents se déplacent sensiblement parallèlement au sol.

29. Outil selon l'une quelconque des revendications précédentes 24 à 28, **caractérisé en ce que** le support résilient ou élastique est protégé sur sa partie supérieure.

30. Outil selon l'une quelconque des revendications précédentes 25 à 29, **caractérisé en ce que** la saillie (28) est située au moins sensiblement dans le plan de l'unité de montage (8).

31. Outil selon l'une quelconque des revendications précédentes, **caractérisé en ce que** deux éléments de râtelage (3) immédiatement adjacents sont entraînés de telle sorte à tourner dans des directions opposées.

32. Outil selon l'une quelconque des revendications précédentes, **caractérisé en ce que** les moyens de commande (9), dans leur position opérationnelle, engagent l'élément de râtelage (3) depuis sa partie inférieure.

33. Outil selon l'une quelconque des revendications précédentes, **caractérisé en ce que** l'unité de montage (8) ne comprend pas de moyens de réajustement distincts.

34. Outil selon l'une quelconque des revendications précédentes 1 à 33, **caractérisé en ce qu'**un ressort de compression (36) est disposé à l'intérieur de l'unité de montage (8).

35. Outil selon la revendication 34, **caractérisé en ce que** le ressort de compression (36) est conçu comme un ressort hélicoïdal.

36. Outil selon l'une quelconque des revendications 34 ou 35, **caractérisé en ce que** la tension du ressort (36) peut être ajustée.

37. Procédé d'utilisation d'un outil destiné à déplacer une récolte reposant sur le sol, comprenant un cadre (2) et un ou plusieurs éléments de râtelage (3) qui tournent chacun autour d'un axe de rotation respectif (4), chaque élément de râtelage étant équipé d'un certain nombre de dents de râtelage (7) qui sont capables de tourner autour dudit axe et qui sont fixées aux unités de montage (8) qui s'étendent vers l'extérieur par rapport à l'axe de rotation (4) et sont disposées, au niveau de leurs extrémités situées le plus près de l'axe de rotation, sur un élément de support appartenant à l'élément de râtelage, ledit outil comprenant des moyens de commande (9) à l'aide desquels les dents peuvent être amenées d'une position haute à une position basse et vice versa, les moyens de commande (9) sont conçus de telle manière que les dents de râtelage sont déplacées vers le sol, sont ensuite déplacées de façon au moins sensiblement parallèle au sol sur un segment de leur trajectoire courbe, tout en exerçant leur fonction de râtelage, et sont ensuite déplacées vers le haut dans le but de disperser la récolte, et les moyens de commande (9) possèdent un corps sensiblement rigide (9), qui est immobile par rapport au cadre, **caractérisé en ce que** le corps rigide (9) s'étend uniquement en partie à une certaine distance autour de l'axe de rotation, pour coopérer en glissement ou rotation avec l'unité de fixation (8).
